# FASCICULE DE BREVET EUROPEEN

(11) **EP 0 428 901 B1**
(45) Date de publication et mention de la délivrance du brevet: **04.01.1995**
(21) Numéro de dépôt: 90120449.5
(22) Date de dépôt: 25.10.1990
(51) Int. Cl.: G05D 16/10

(54) **Détendeur neutralisable**
Neutralisierbares Reduzierventil
Pressure reducer which can be neutralised

(30) Priorité: 21.11.1989 FR 8915271
(43) Date de publication de la demande: 29.05.1991
(73) Titulaire: LUXEMBOURG PATENT COMPANY S.A., 1720 Luxembourg (LU)
(72) Inventeur: Goichot, René, F-21110 Genlis (FR); Paravigna, Zivko, F-21110 Genlis (FR)
(74) Mandataire: Meyers, Ernest

(56) Documents cités:
- EP-A- 0 112 765
- WO-A-85/00871
- WO-A-86/01871
- CH-A- 572 589
- DE-B- 1 220 688
- PATENT ABSTRACTS OF JAPAN vol. 9, no. 207 (P-382)(1930) 24 août 1985,& JP-A-60 68410 (FUJIKOSHI K.K.) 19 avril 1985,

## Description

La présente invention concerne un détendeur neutralisable comprenant un corps conçu pour être fixé sur une source de gaz, un organe de fermeture avec un élément d'étanchéité dans un canal d'admission et soumis à l'action d'un ressort pour assurer sa fermeture, une chambre de détente à l'intersection du canal d'admission et d'un canal de sortie, un piston monté de manière étanche et flottante dans ladite chambre et comprenant, d'un côté, un pointeau pour agir sur ledit organe de fermeture contre l'action dudit ressort, le côté du piston opposé à celui du pointeau étant soumis à l'action d'un ressort de détente dont la force est réglable par un volant de manoeuvre.

Ces détendeurs, bien connus en soi, peuvent être fixés directement sur un récipient ou un circuit gazeux et permettent le prélèvement du gaz à une pression quasi constante et réglable, quelle que soit la pression de la source gazeuse, la pression en aval étant toutefois inférieure à la pression amont. Toutefois, les détendeurs connus ne sont pas réversibles, c'est-à-dire qu'ils ne permettent l'écoulement du gaz que de la source de gaz vers un circuit d'utilisation. De ce fait, lorsque le détendeur est, par exemple, fixé sur une bouteille de gaz, il n'est pas possible de remplir celle-ci à travers le détendeur.

Le but de la présente invention est de prévoir un nouveau détendeur qui, outre ses fonctions habituelles, permet l'écoulement du gaz à contresens et, de ce fait, le remplissage d'une bouteille ou autre source de gaz à travers le détendeur.

Pour atteindre cet objectif, le détendeur proposé par la présente invention est essentiellement caractérisé par une tige montée axialement dans le volant de manoeuvre et occupant, sous l'action d'un ressort, une position non opérative dans laquelle elle s'étend à travers le ressort de détente jusqu'à proximité du piston, mais pouvant être déplacée axialement, contre l'action de son ressort, pour agir sur le piston et, par l'intermédiaire du pointeau de celui-ci, sur l'organe de fermeture pour déplacer celui-ci de son siège contre l'action de son ressort.

Selon un mode de réalisation préféré, la tige est prévue dans un alésage cylindrique ouvert vers l'extérieur à travers un orifice plus étroit que ledit alésage et est entourée par son ressort qui prend appui, d'une part, sur une tête élargie de la tige et, d'autre part, sur un disque solidaire du volant et traversé par la tige.

La tête de la tige comporte, de préférence, une gorge périphérique munie d'un joint torique.

La face du piston qui est actionné par la tige peut comporter une cuvette de réception de l'extrémité de la tige et dont la forme est complémentaire à cette dernière.

Pour neutraliser le détendeur il suffit, par conséquent, d'enfoncer la tige, soit manuellement, soit à l'aide d'un instrument approprié afin de bloquer l'organe de fermeture dans sa position ouverte pour permettre l'injection du gaz sous pression à travers le détendeur dans une bouteille de gaz ou autre source de gaz.

Grâce à sa simplicité d'utilisation, le détendeur proposé par l'invention réduit les risques de fausses manipulations. Il est, de ce fait, particulièrement adapté aux équipements de secours ou ceux présentant des risques d'utilisation. Il est, en outre, le seul composant intermédiaire entre la source de gaz, qui peut être une bouteille de gaz, et le circuit d'utilisation, d'où risques de fuite notablement diminués.

Le détendeur selon l'invention est, par ailleurs, très peu exposé au chocs. Il peut, en effet, être contenu dans le volume de sécurité des systèmes habituels de capotage des récipients comme, par exemple, les cloches de protection des bouteilles de gaz.

Grâce au détendeur proposé, les équipements qui sont montés en aval sont toujours stockés ou transportés sans pression, le détendeur étant en position fermé.

Grâce à sa structure très compacte le détendeur est particulièrement recommandé pour des récipients embarqués, des récipients de taille réduite ou des équipements avec un besoin d'esthétique.

Le détendeur peut, en outre, être équipé de tous les accessoires utilisés habituellement comme, par exemple, un manomètre, une soupape, un régulateur de débit, un débimètre, etc.

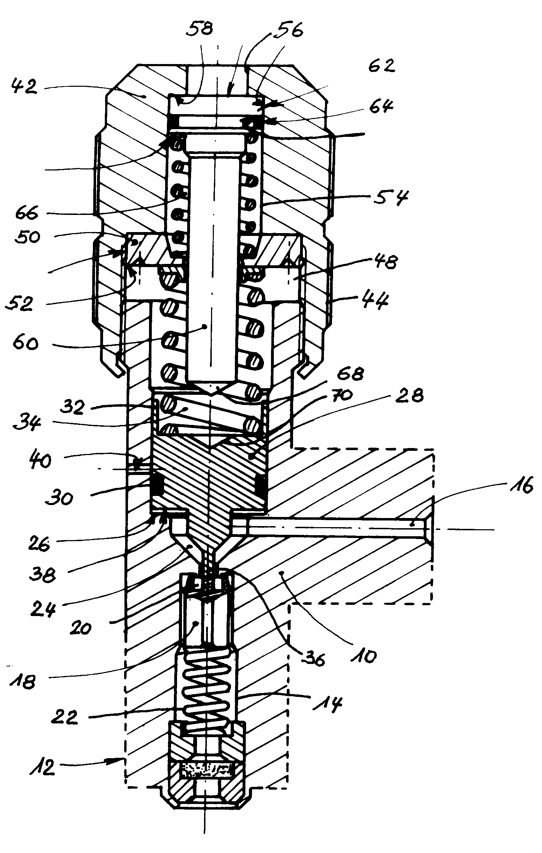

D'autres particularités et caractéristiques ressortiront de la description d'un mode de réalisation préféré, présentée ci-dessous, à titre d'illustration, en référence à la figure unique qui montre schématiquement un détendeur neutralisable en coupe axiale.

Le détendeur représenté sur la figure comporte un corps 10, par exemple métallique, muni d'un filet extérieur 12 lui permettant d'être vissé sur une bouteille de gaz ou autre source de gaz. Le corps 10 comporte un canal d'admission axial 14 et un canal radial de sortie 16 pouvant être connecté sur un circuit d'utilisation.

Dans le canal 14 se trouve un clapet 18 avec un joint d'étanchéité 20. Ce clapet 18 est normalement, c'est-à-dire sans influence extérieure, maintenu en position fermée sous l'action d'un ressort 22.

A l'intersection du canal d'admission 14 et du canal de sortie 16 se trouve une chambre de détente 24 avec une partie supérieure cylindrique et une partie inférieure à section réduite séparées l'une de l'autre par un épaulement annulaire 26. Un piston de détente 28 est monté dans cette chambre 24 de manière flottante et étanche grâce à un joint d'étanchéité circulaire 30. La partie cylindrique supérieure du piston de détente 28 est prolongée axialement par un bord 32 définissant un logement cylindrique dans lequel prend appui un ressort de détente 34. Le piston de détente 28 comporte, par ailleurs, un pointeau axial 36 dirigé verticalement vers le clapet de fermeture 18. La transition entre le pointeau 36 et la partie cylindrique du piston 28 est formée par un épaulement annulaire radial 38 pouvant prendre appui sur l'épaulement correspondant 26 de la chambre de détente 24.

Le corps 10 du détendeur comporte, par ailleurs, un orifice radial de décharge 40 prévu au niveau du piston de détente 28, normalement au-dessus du joint 30. Cet orifice 40 permet, en cas d'augmentation anormal de la pression dans la chambre de détente 24, par exemple suite d'un réchauffement, au gaz de s'échapper vers l'extérieur ou dans un circuit prévu à cet effet et raccordé à l'orifice 40. En effet, dans ces cas le piston 28 s'efface sous l'action de la surpression dans la chambre 24 en comprimant son ressort de détente 34 pour mettre la chambre 24 en communication avec l'orifice 40.

Le corps 10 est coiffé d'un volant de manoeuvre 42 qui est déplaçable axialement par rapport au corps 10 grâce à des pas de vis complémentaires à l'intérieur de la jupe 44 du volant 42 respectivment à l'extérieur du corps 10. Dans la chambre 48 définie par la jupe 44 du volant de manoeuvre 42 se trouve un disque 50 rendu solidaire du volant 42, par exemple, par un sertissage 52. Ce disque 50 forme l'appui supérieur du ressort de détente 34 dont l'appui inférieur est formé par le piston de détente 28.

Le détendeur tel que décrit jusqu'à présent fonctionne de manière classique pour permettre l'écoulement du gaz à travers le canal 16 à une pression constante et déterminée par les caractéristiques du ressort 34 et par la position du volant de manoeuvre 44. Lorsque le volant de manoeuvre 42 est suffisamment dévissé, le ressort 34 n'est pas suffisamment comprimé pour exercer, par l'intermédiaire du piston 28 et du pointeau 36 une force sur le clapet 18, capable de faire déplacer celui-ci contre l'action du ressort 22 de sorte que le détendeur reste fermé et qu'il n'y a pas de sortie de gaz à travers les canaux 14 et 16. Par contre, lorsque le volant 42 est manoeuvré suffisamment pour comprimer le ressort 34 à un degré suffisant pour augmenter sa force de poussée de manière que le pointeau 36 enfonce le clapet 18 contre l'action de son ressort 22, le gaz peut s'échapper du canal 14 vers la chambre de détente 24. Cet écoulement de gaz vers la chambre 24 augmentera momentanément la pression dans celle-ci, à tel point que cette augmentation de pression dans la chambre 24 combinée avec la poussée du ressort 22 suffisent à remonter le piston 28 contre l'action de son ressort 34, ce qui provoquera, à nouveau, la fermeture du clapet 18. Toutefois, le gaz s'écoulera de la chambre 24 à travers le canal 16 vers le circuit d'utilisation, de sorte que la pression descendra dans la chambre de détente 24 jusqu'au moment où la force du ressort 34 sera, à nouveau, suffisante pour agir par le pointeau 36 sur le clapet 18 et permettre au gaz de s'échapper, à nouveau, dans la chambre de détente 24.

Cette suite d'opérations d'ouverture et de fermeture du clapet 18 a été, pour les besoins de la description, décrite au "ralenti" mais, en pratique, ces opérations se répètent à une cadence tellement rapide que le piston de détente 28 semble rester immobile dans une position déterminée, d'une part, en fonction de la force du ressort 34, déterminée, à son tour, par le degré de rotation du volant de manoeuvre 42 et, d'autre part, en fonction de la pression du gaz dans la bouteille ou la source de gaz pour assurer, d'une manière connue en soi, la détente réglée de ce gaz.

Le degré de détente du gaz est donc déterminé par la force du ressort 34, c'est-à-dire l'amplitude de rotation du volant 42. Plus on enfonce le volant 42 sur le corps 10 du détendeur, plus on augmente la force du ressort 34 et plus forte sera la pression du gaz détendu. Il est bien entendu possible de régler la détente du gaz par le volant 42 en fonction de l'affichage d'un manomètre mesurant la pression du gaz dans le circuit d'utilisation. Il est également possible d'étalonner le volant 42 par des graduations en fonction du degré de détente.

Pour fermer le détendeur et isoler le circuit d'utilisation de la bouteille ou de la source de gaz, il suffit de dévisser complètement le volant 42 jusqu'à ce que le ressort 34 et le pointeau 36 libèrent le clapet 18 à l'action de son ressort 22 pour maintenir le clapet 18 en position fermée.

Quelle que soit la position du volant 42, le détendeur tel que décrit ci-dessus ne permet pas une circulation du gaz en sens inverse, c'est-à-dire qu'il ne permet pas le remplissage d'une bouteille en branchant le raccord du canal de sortie 16 sur une provision de gaz, car la pression du gaz dans la chambre de détente 24 ferait, tout au plus, monter le piston 28, alors que le ressort 22 maintiendrait le clapet 20 en position fermée.

Pour permettre l'écoulement du gaz en sens inverse et donc le remplissage d'une bouteille à travers le détendeur, l'invention prévoit un système de neutralisation du détendeur. A cet effet, le volant de manoeuvre comporte un alésage cylindrique axial 54 ouvert vers l'extérieur à travers un orifice 56 plus étroit que l'alésage 54 et délimité de celui-ci par un épaulement annulaire 58. Dans l'alésage 54 se trouve une tige axiale 60 dont la tête élargie 62 occupe toute la section de l'alésage 54. Un joint torique 64 prévu autour de la tête 62 peut assurer l'étanchéité vers l'extérieur. Un ressort 66 est prévu autour de la partie supérieure de la tige 60, ce ressort prenant appui, d'une part, sur la tête 62 de la tige 60 et, d'autre part, sur le disque 50, tandis que la partie inférieure de la tige 60 s'étend axialement à travers une ouverture centrale de ce disque 50 et à travers le ressort de détente 34. L'action du ressort tend, par conséquent, à maintenir la tige 60 dans une position inopérative contre l'épaulement 58. Dans le mode de réalisation représenté, l'extrémité inférieure 68 de la tige 60 est en forme de pointe, alors que le piston de détente 28 comporte, en face de la pointe 68, une cuvette 70 de forme complémentaire à cette dernière.

La neutralisation du détendeur 28 est effectuée par déplacement axial de la tige 60 contre l'action de son ressort 66 à l'aide d'un outil approprié. Cette poussée amène l'extrémité 68 de la tige au contact du piston 28 qui, en descendant, actionne, par son pointeau 36 le clapet 18 contre l'action de son ressort 22. Ce mouvement est arrêté au contact des deux épaulements 38 du piston 28 et celui 26 du corps 10. Il suffit, dès lors, d'insufler du gaz à travers le canal de sortie 16 afin qu'il puisse traverser la chambre de détente 24 et le canal d'admission 14 dans le sens inverse du sens d'écoulement habituel. Pendant le remplissage, le piston de détente 28 est maintenu en appui sur l'épaulement 26 soit par le maintien de la pression sur la tête 62 de la tige 60, soit par un moyen de blocage de la tige 60 dans cette position opérative, par exemple, au moyen d'un système à baïonnette.

En relâchant la poussée sur la tête de la tige 60 ou en déverrouillant son système de blocage, la tige remonte dans sa position inopérative sous l'action du ressort 66. Le piston 28 n'étant, dès lors, plus sollicité par la tige 60, il cède sous la pression du ressort 22 et de l'action du clapet 18 pour permettre à celui-ci de revenir en position de fermeture.

## Revendications

1. Détendeur neutralisable comprenant un corps (10) conçu pour être fixé sur une source de gaz, un organe de fermeture (18) avec un élément d'étanchéité (20) dans un canal d'admission (14) et soumis à l'action d'un ressort (22) pour assurer sa fermeture, une chambre de détente (24) à l'intersection du canal d'admission (14) et d'un canal de sortie (16), un piston (28) monté, de manière étanche et flottante dans ladite chambre (24) et comprenant, d'un côté, un pointeau (36) pour agir sur ledit organe de fermeture (18) contre l'action du dit ressort (22), le côté du piston opposé à celui du pointeau (36) étant soumis à l'action d'un ressort de détente (34) dont la force est réglable par un volant de manoeuvre (42), caractérisé par une tige (60) montée axialement dans le volant de manoeuvre (42) et occupant, sous l'action d'un ressort (66) une position non opérative, dans laquelle elle s'étend à travers le ressort de détente (34) jusqu'à proximité du piston (28), mais pouvant être déplacé axialement contre l'action de son ressort (66) pour agir sur le piston (28) et, par l'intermédiaire du pointeau (36) de celui-ci, sur l'organe de fermeture (18) pour déplacer celui-ci de son siège contre l'action de son ressort (22).

2. Détendeur selon la revendication 1, caractérisé en ce que la tige (60) est prévue dans un alésage cylindrique (54) ouvert vers l'extérieur à travers un orifice (56) plus étroit que ledit alésage (54) et en ce que la tige (60) est entourée par son ressort (66) qui prend appui, d'une part, sur une tête élargie (62) de la tige (60) et, d'autre part, sur un disque (50) solidaire du volant (42) et traversé par la tige (60).

3. Détendeur selon la revendication 2, caracterisé en ce que la tête (62) de la tige (60) comporte une gorge périphérique munie d'un joint torique (64).

4. Détendeur selon la revendication 2, caractérisé en ce que la face du piston (28) qui est actionnée par la tige (60) comporte une cuvette (28) de réception de l'extrémité de la tige (60), la forme de cette cuvette (28) étant complémentaire à cette dernière.

## Patentansprüche

1. Neutralisierbares Druckminderventil mit einem auf einen Gasbehälter aufschraubbaren Gehäuse (10), einem zwecks Schliessung der Wirkung einer Feder (22) ausgesetzten Schliessorgan (18) mit einer Dichtung (20) in einem Einlasskanal (14), eine Entspannungskammer (24) an der Schnittstelle des Einlasskanals (14) und eines Auslasskanals (16), einem gasdicht und schwebend in dieser Kammer (24) angeordneten Kolben (28), welcher auf einer Seite einen Stift (36) aufweist, der das Schliessorgan (18) gegen die Wirkung der Feder (22) betätigt, wobei die dem Stift (36) entgegengesetzte Seite des Kolbens der Wirkung einer Entspannungsfeder (34) ausgesetzt ist , deren Kraft durch ein Handrad (42) einstellbar ist, gekennzeichnet durch einen axial im Handrad (42) angebrachten Bolzen (60), welcher unter der Wirkung einer Feder (66) eine unwirksame Stellung einnimmt, in welcher er sich durch die Entspannungsfeder (34) bis in die Nähe des Kolbens (28) erstreckt, welcher aber gegen die Wirkung seiner Feder (66) axial verschiebbar ist, um auf den Kolben (28) und über dessen Stift (36) das Schliessorgan (18) zu betätigen, um dieses gegen die Wirkung seiner Feder (22) von seinem Sitz abzuheben.

2. Druckminderventil nach Anspruch 1, dadurch gekennzeichnet dass der Bolzen (60) in einer zylindrischen Bohrung (54) vorgesehen ist, welche über eine Öffnung (56), die kleiner ist als die Bohrung (54), nach aussen offen ist, dass der Bolzen (60) von seiner Feder (66) umgeben ist welche sich einerseits auf einem breiteren Kopfflansch (62) des Bolzen (60) und andererseits auf einer zum Handrad (42) gehörenden und vom Bolzen (60) durchdrungenen Scheibe (50) abstützt.

3. Druckminderventil nach Anspruch 2, dadurch gekennzeichnet, dass der Kopf (62) des Bolzens (60) eine äussere Rille mit einer O-Ring Dichtung (64) aufweist.

4. Druckminderventil nach Anspruch 2, dadurch gekennzeichnet, dass die vom Bolzen (60) betätigte Kopffläche des Kolbens (28) zur Aufnahme der Spitze des Bolzens (60) eine muldenförmige Vertiefung (70) mit einer zur Vertiefung (70) komplementären Form aufweist.

## Claims

1. Pressure reducer that can be neutralized comprising a body (10) designed to be fixed onto a gas source, a closure member (18) with a sealing element (20) in an inlet passage (14) and subjected to the action of a spring (22) in order to close it, a pressure-reduction chamber (24) at the intersection of the inlet passage (14) and of an outlet passage (16), a piston (28) mounted, in a sealed and floating way, in the said chamber (24) and comprising, on one side, a needle (36) for acting on the said closure member (18) against the action of the said spring (22), the opposite side of the piston from that of the needle (36) being subjected to the action of a pressure-reduction spring (34), the force of which is adjustable by means of an operating knob (42), characterized by a rod (60) mounted axially in the operating knob (42) and occupying, under the action of a spring (66), an inoperative position, in which it extends through the pressure-reduction spring (34) as far as close to the piston (28), but being capable of being moved axially against the action of its spring (66) in order to act on the piston (28) and, by means of the needle (36) of the latter, on the closure member (18) in order to move the latter off its seat against the action of its spring (22).

2. Pressure reducer according to Claim 1, characterized in that the rod (60) is provided in a cylindrical bore (54) open to the outside through an orifice (56) narrower than the said bore (54) and in that the rod (60) is surrounded by its spring (66) which bears, on the one hand, on a widened head (62) of the rod (60) and, on the other hand, on a disc (50) secured to the knob (42) and through which the rod (60) passes.

3. Pressure reducer according to Claim 2, characterized in that the head (62) of the rod (60) includes a peripheral groove fitted with an O-ring (64).

4. Pressure reducer according to Claim 2, characterized in that that face of the piston (28) which is actuated by the rod (60) includes a cup (28) for receiving the end of the rod (60), the shape of this cup (28) complementing the latter.
